# NEUE EUROPÄISCHE PATENTSCHRIFT

(11) **EP 2 754 961 B2**
(45) Veröffentlichungstag und Bekanntmachung des Hinweises auf die Entscheidung über den Einspruch: **09.08.2023**
(45) Hinweis auf die Patenterteilung: 13.09.2017
(21) Anmeldenummer: 14000089.4
(22) Anmeldetag: 10.01.2014
(51) Int. Cl.: F23J 3/02, F23M 5/08, F22B 37/10, F28F 19/00, F22G 3/00, F28D 7/06, F28F 21/04

(54) **Verfahren und Vorrichtung zum Schutz von Wärmetauscherrohren**
Method and device for protecting heat exchanger tubes and ceramic component
Procédé et dispositif de protection de tubes d'échangeur de chaleur et composant céramique

(30) Priorität: 14.01.2013 DE 102013000424
(43) Veröffentlichungstag der Anmeldung: 16.07.2014
(60) Teilanmeldung: 15002969.2
(73) Patentinhaber: MARTIN GmbH für Umwelt- und Energietechnik, 80807 München (DE)
(72) Erfinder: Weber, Toralf, DE - 82275 Emmering (DE); Martin, Johannes, DE - 81675 München (DE)
(74) Vertreter: Castell, Klaus

(56) Entgegenhaltungen:
- EP-A1- 0 981 015
- EP-A1- 0 981 015
- CH-A1- 699 405
- DE-A1- 10 042 391
- DE-A1- 19 816 059
- DE-A1- 19 816 059
- DE-T2- 69 907 604
- DE-U1-202008 006 044
- GB-A- 2 263 330
- GB-A- 2 263 330
- US-A- 3 110 273
- US-A- 3 470 624
- Prioritätsbescheinigung der deutschen Patentanmeldung DE 102013000424.1
- "Auszug zu 'Raum'", Duden, pages 1-5, Retrieved from the Internet: URL:https://www.duden.de/rechtschreibung/R aum#Bedeutung3
- THOMAS HERZOG: "Präsentation ''Fouling versus Availability'", PREWIN General Assembly Meeting 19/20 Juni 2012 in Coventry, June 2012 (2012-06),
- Ausdruck von der Website der CheMin GmbH mit Auflistung der Präsentationen und Publikationen,
- Ausdruck von der Website des PREWIN Network,
- Teilnehmerliste des PREWIN General Assembly Meeting vom 19./20.Juni 2012 in Coventry
- Agenda des PREWIN General Assembly Meeting vom 19./20 Juni2012 in Coventry
- Newsletter bifa aktuell, Ausgabe 4.2012, der bifa Umweltinstitut GmbH
- Präsentation "Wärmeauskopplung in Strahlungszügen am Beispiel der Abfallverbrennung" von Wolfgang Spiegel, CheMin GmbH, am 2. J+G-Wirbelschichtworkshop vom 14.-16. November 2012 im Kongresszentrum Palatin Wiesloch
- Ausdruck von der Website von J+G Refractories
- Auszug aus J+G Refractories Report 2012, 23. Ausgabe
- Artikel "Strahlungsüberhitzer im Feuerraum zur Effizienzsteigerung -Erste Erfahrungen am MHKW Rosenheim" von Reinhold Egeler, JosefSchmidt, Johannes J. E. Martin und Toralf Weber, aus demKonferenzbuch "Energie aus Abfall - Band 10" von Karl J. Thome-Kozmiensky und Michael Beckmann, von Januar 2013
- Prospekt zur Berliner Abfallwirtschafts- und Energiekonferenz vom 28.und 29. Januar 2013
- Eidesstattliche Erklärung vom 12. Juni 2018 von Herrn Tobias Kernvon der Mokesys AG und der Mokesa AG
- Präsentation "Heat flux sensor in case of a radiant super heater System?? von Wolfgang Spiegel, Gabi Magel, Dominik Molitor und Joos Breil, CheMin GmbH, am PREWIN General Assembly Meeting vom 5./6. Juni 2013 in Kristiansand
- Präsentation "Development of a Rear-Ventilated SuperheaterRefractory System" von Hans-Georg Beul und Dr. Manfred Möller,Jünger+Gräter GmbH (J+G Refractories), am PREWIN General Assembly Meeting vom 5./6. Juni 2013 in Kristiansand
- Präsentation "Radiant superheater in the furnace for increasing energy efficiency, First experiences at Rosenheim WTE plant" der Firma MARTIN am PREWIN General Assembly Meeting vom 5./6.Juni 2013 in Kristiansand
- Agenda des PREWIN General Assembly Meeting vom 5./6. Juni 2013in Kristiansand
- Computer-Screenshot als Beleg für das Datum des Herunterladens von D11
- Vergrösserung des oberen Teils der Zeichnung auf Seite 9 von D3
- Auszug zu Spalt aus dem Online-Duden
- Prospekt "Rohrwandschutz-System JuSys® Air" vom 23. November 2011

## Beschreibung

Die Erfindung betrifft eine Vorrichtung gemäß dem Oberbegriff des Patentanspruchs 1.

Wärmetauscherrohre dienen in Kesselanlagen zum Teil dazu, Wasser zu verdampfen und zum Teil dazu, verdampftes Wasser zu überhitzen. Die Temperaturen in den Wärmetauscherrohren größerer Kesselanlagen mit nachgeschalteter Turbine sollten möglichst hoch liegen, da mit der Höhe der Temperatur der Wirkungsgrad der nachgeschalteten Turbine steigt.

Insbesondere bei Verbrennungsöfen zum Verbrennen fester Brennstoffe wie beispielsweise Müll- und Biomasseverbrennungsanlagen besteht das Problem, dass die Wärmetauscherrohre korrodieren. Zahlreiche Untersuchungen haben gezeigt, dass diese Korrosion durch anhaftende Beläge aus Aschen und Salzen induziert wird. Gasförmige Verbindungen im Rauchgas wie zum Beispiel HCl und SO₂ beeinflussen die Zusammensetzung dieser Beläge, führen aber nicht direkt zu Korrosionsangriffen auf diesen Bauteilen.

In Müll- und Biomasseverbrennungsanlagen sind Korrosionsraten von bis zu einem Millimeter pro 1.000 Stunden zu beobachten.

Als Korrosionsschutzmaßnahmen werden keramische Abkleidungen und metallische Beschichtungen eingesetzt, die entweder auftragsgeschweißt oder thermisch gespritzt werden.

Die DE 699 07 604 T2 beschreibt ein Verfahren, bei dem keramische Bauteile als Korrosionsschutz bei Überhitzerrohren installiert werden.

Die DE 38 23 439 C2 beschreibt ein keramisches fertig gesintertes Schutzelement aus miteinander verzahnten Halbschalen. Diese vorzugsweise aus Siliziumkarbid hergestellten Schalen haben sich in der Praxis nicht bewährt, da das benötigte Material relativ dick und schwer ausgeführt werden musste, um der Beanspruchung standzuhalten. Das Schutzelement wurde mit Mörtel hinterfüllt. Da die Verzahnung keine Wärmeausdehnung zuließ, kam es bei den hohen Betriebstemperaturen zur Rissbildung bis hin zum Aufsprengen der Schalen.

Eine weitere keramische Schutzhülle aus sich überlappenden Halbschalen aus Siliziumkarbid beschreibt die DE 20 2008 006 044 U1.

Keramische Abkleidungen an den Wänden, wie sie beispielsweise in der DE 198 16 059 A1 und der EP 0 981 015 A1 beschrieben sind, haben sich an den Wänden des Feuerraumes bewährt. Der Einsatz keramischer Schutzschalen für von allen Seiten von Rauchgas umströmte Wärmetauscherrohre insbesondere im Überhitzerbereich ist hingegen nicht praktikabel. Neben der statischen Belastung der Stahlkonstruktion unterliegen die Wärmetauscherrohre im Überhitzerbereich mechanischen Belastungen bei der Reinigung.

Weit verbreitet sind Klopfeinrichtungen, die mechanisch auf die Rohre im Überhitzerbereich einwirken, um die Beläge zu entfernen. Auch mit Wasser- und Dampfbläsern wird versucht die Beläge zu entfernen. Dadurch entstehen zusätzliche chemische Belastungen. Diese Belastungen schränken die Einsatzmöglichkeiten von keramischen Abkleidungen für Korrosionsschutzmaßnahmen im Überhitzerbereich stark ein.

In den Strahlungszügen haben sich Auftragsschweißungen als wirksamer Korrosionsschutz bewährt. Als Schweißmaterial hat sich der Werkstoff 2.4858 (Inconel 625) durchgesetzt.

Materialtemperaturen oberhalb von 400 °C, wie sie im Überhitzerbereich und im Verdampferbereich bei höheren Betriebsdrücken vorkommen, schränken den Korrosionsschutz dieses Werkstoffs jedoch deutlich ein. Auch der Einsatz anderer Schweißzusatzwerkstoffe, wie zum Beispiel 2.4606 (Inconel 686), bringt gegenüber anderen Schweißzusatzwerkstoffen keine signifikanten Verbesserungen.

Thermische Spritzverfahren werden immer öfter als Korrosionsschutzmaßnahme eingesetzt. Versuche mit unterschiedlichsten Materialkompositionen als Korrosionsschutzschicht auf verschiedenen Kesselbauteilen zeigten, dass derartige Schutzschichten unvorhersehbar in kurzer Zeit versagen können. Ein langfristiger und betriebssicherer Korrosionsschutz ist daher auch mit derartigen thermisch gespritzten Schutzschichten nicht möglich.

Der Korrosionsschutz hat Einfluss auf den Wirkungsgrad des Dampferzeugers. Die meisten Müll- und Biogasverbrennungsanlagen werden nur mit Dampftemperaturen von 400 °C bei 40 bar betrieben, um die Korrosion in Grenzen zu halten. Eine Erhöhung der Dampfparameter ist mit deutlich ansteigenden Korrosionsraten an den Kesselrohren und dadurch einer Reduzierung der Verfügbarkeiten der Anlage verbunden. Die bekannten Korrosionsschutzmaßnahmen konnten hier keine zufriedenstellenden Verbesserungen bieten.

Die GB 2 263 330 A beschreibt ein gattungsgemäßes Verfahren, bei dem an einem besonders beanspruchten Bereich des Überhitzers um ein Wärmetauscherrohr ein weiteres Metallrohr angeordnet ist, das während des Betriebs der Anlage zerstört wird und dadurch das darunter liegende Rohr eine bestimmte Zeit lang schützt. Die Zerstörung dieses Hüllrohres führt nur zu einem zeitlich sehr begrenzten Schutz und die Befestigung des Hüllrohres am Wärmetauscherrohr führt zu einer Schwächung des Wärmetauscherrohres, das gerade im Bereich dieser Befestigungspunkte zu besonderer Korrosion neigt.

Der Erfindung liegt daher die Aufgabe zugrunde, die Korrosion an Wärmetauscherrohren in Dampfkesselanlagen, auch bei Temperaturen weit über 400 °C, deutlich zu reduzieren.

Diese Aufgabe wird mit einer Vorrichtung mit den Merkmalen des Patentanspruchs 1 gelöst.

Dabei sind im Rahmen der Erfindung unter einem Gas ein gasförmiges Fluid, ein flüssiges Fluid und jedes Fluid in dazwischen liegenden Aggregatszuständen wie auch verschiedene Dampfarten zu verstehen.

Der Erfindung liegt die Erkenntnis zugrunde, dass auch Wärmetauscherrohre, die frei im Feuerraum verlaufen und vorzugsweise an der Decke des Feuerraums aufgehängt sind, wirksam mit Keramikbauteilen geschützt werden können, wenn zwischen Wärmetauscherrohr und Keramikelement ein Gas zugeführt wird.

Frei im Rauchgaszug hängende Wärmetauscherrohre sind nur an einem Ende zugänglich. Wenn ein Gas in einen Bereich zwischen Wärmetauscherrohr und Keramikelement zugeführt wird, besteht die Gefahr, dass dieses Gas sofort durch die ersten Spalten zwischen den Keramikelementen in den Feuerraum gelangt und daher keinen wirksamen Schutz aller Wärmetauscherrohre bewirkt. Daher wurde das Zuführen von Gas nur für Wärmetauscherrohre an Membranwänden von Kesselanlagen angewandt, da dort das Gas auf einfache Art und Weise an jeden Bereich der Wärmetauscherrohre und insbesondere an die thermisch besonders belasteten Bereiche gebracht werden kann.

Die thermisch besonders belasteten Bereiche von innerhalb eines Kessels angeordneten Wärmetauscherrohren sind weit von den Membranwänden entfernt und daher durch zugeführtes Gas schwer zu erreichen. Außerdem beeinträchtigt zu viel zugeführtes Gas im Feuerraum oder in den Rauchgaszügen den Wirkungsgrad der Anlage.

Es hat sich jedoch herausgestellt, dass bei entsprechendem Druck und entsprechender Ausbildung der Keramikelemente ein Gas bis an die thermisch am stärksten belasteten Bereiche der Wärmetauscherrohre gebracht werden kann, das dann innerhalb eines Spalts zwischen Wärmetauscherrohr und Keramikelement das Wärmetauscherrohr dadurch schützt, dass ein geringer Überdruck an zuströmendem Gas ein Eindringen von Rauchgasen durch das Keramikbauteil zu den Wärmetauscherrohren verhindert.

Besonders vorteilhaft ist es, wenn das Gas an der heißesten Stelle zwischen Wärmetauscherrohr und Keramikelement zugeführt wird. Dies führt dazu, dass der höchste Druck des Gases dort vorliegt, wo das Wärmetauscherrohr besonders thermisch belastet wird. Je nach Konstruktion der Kesselanlage kann es auch vorteilhaft sein, das Gas an der Stelle mit dem höchsten Rauchgasdruck, das heißt dem höchsten Gegendruck am Keramikelement, zuzuführen.

Das Keramikbauteil kann so ausgebildet sein, dass das zugeführte Gas im Keramikbauteil geführt wird. Da das Keramikbauteil jedoch in der Regel aus mehreren Keramikelementen aufgebaut ist, besteht die Gefahr, dass das zugeführte Gas frühzeitig zwischen den Keramikelementen entweicht und daher nicht alle Bereiche des Wärmetauscherrohrs mit Gas beaufschlagt werden können. Auch ein Mörtel, der vorzugsweise zwischen den Keramikelementen eingesetzt ist und die Keramikelemente verbindet, kann häufig ein Entweichen des Gases nicht verhindern.

Daher wird vorgeschlagen, dass das Gas durch ein im Keramikbauteil geführtes Rohr eingebracht wird. Dieses Rohr kann aus Keramik sein und beispielsweise auch aus mehreren Rohrelementen bestehen. Vorzugsweise ist dieses Rohr jedoch ein Metallrohr. Da dieses Rohr im Keramikbauteil geführt ist und die Innenseite des Rohres durch das zugeführte Gas gekühlt wird, kann das Gas in einem Metallrohr zur am stärksten thermisch belasteten Stelle eines Wärmetauscherrohrs gebracht werden. Von dort kann sich das Gas verteilen und das Gas wirkt auch dann als Schutz für die Wärmetauscherrohre, wenn das Keramikbauteil eine dichte Hülle bildet. Dieses Rohr ist vorzugweise zwischen den Wärmetauscherrohren angeordnet. Vorzugsweise liegt es mittig zwischen einem zuführenden und einem abführenden Wärmetauscherrohr.

Das an der Stelle des höchsten Gegendrucks in den Bereich zwischen Wärmetauscherrohr und Keramikelement zugeführte Gas kann in Spalten zwischen Wärmetauscherrohr und Keramikbauteil längs der Wärmetauscherrohre strömen, um über die gesamte Länge der Wärmetauscherrohre ein Eindringen von Rauchgas zu dem Wärmetauscherrohr zu vermeiden.

Insbesondere bei besonders langen Wärmetauscherrohren kann es vorteilhaft sein, das Gas an mehreren Stellen zuzuführen. Daher wird vorgeschlagen, dass das Gas über mehrere längs des Wärmetauscherrohres beabstandete, in einem Gasrohr angeordnete Öffnungen zugeführt wird. Das als Sperrluft dienende Gas kann dann über die Höhe des Strahlungsüberhitzers verteilt mittels mehrerer Zuführungen erfolgen. Die kann durch Öffnungen oder Bohrungen zwischen einem mittleren Luftzuführungskanal und den Überhitzerrohren innerhalb des Keramikbauteils erfolgen, das als Formsteinpaket ausgebildet sein kann. Bei einem Defekt an den keramischen Bauteilen führt dies zu einer sicheren Versorgung mit Sperrluft auch oberhalb der Schadstelle.

Die Vorrichtung betrifft Wärmetauscherrohre, die nicht nur an einer Seite mit einem Keramikbauteil geschützt sind, sondern dessen Umfangsfläche von mindestens einem Keramikbauteil umgeben ist. Dadurch ist das Wärmetauscherrohr auf der gesamten Umfangsfläche vom Keramikbauteil umgeben und geschützt, während die Gaszuführung dafür sorgt, dass kein Rauchgas durch Spalten im Keramikbauteil an das Wärmetauscherrohr gelangen kann.

Da die Umfangsfläche des Wärmetauscherrohres vom Keramikbauteil umgeben ist, wird vorgeschlagen, dass die Gaszuführung zunächst in Richtung der Wärmetauscherrohre im Keramikbauteil erfolgt bevor das Gas wieder in Längsrichtung der Wärmetauscherrohre zurückströmt und dabei an Spalten im Keramikbauteil einen Gasdruck aufbaut, der ein Eindringen von Rauchgas verhindert.

Die Gaszuführung hat ein Gebläse. Dieses Gebläse ermöglicht es, den Gasdruck so einzustellen, dass nicht zu viel Gas durch das Keramikbauteil in den Feuerraum gelangt und andererseits über die gesamte Länge der Wärmetauscherrohre ein ausreichender Gegendruck aufgebaut wird, um das Eindringen von Rauchgasen zu den Wärmetauscherrohren zu vermeiden.

Um dies auf einfache Art und Weise zu ermöglichen, wird vorgeschlagen, dass die Gaszuführung ein im Keramikbauteil geführtes Gasrohr aufweist. Die Führung im Keramikbauteil hält das Gasrohr und ermöglicht es, das Gasrohr durch die Keramik des Keramikbauteils zu stützen.

Im Feuerraum aufgehängte Wärmetauscherrohre sind in vielen Anwendungen U-förmig gebogen, um Wasser oder Dampf in den Feuerraum zu führen und wieder aus dem Feuerraum abzuführen. Bei einer derartigen Ausgestaltung wird vorgeschlagen, dass die Gaszuführung im Bereich des Bogens endet. Dies erlaubt es, insbesondere den besonders beanspruchten Bogenbereich mit frisch zugeführtem Gas zu kühlen und/oder bevorzugt an dieser beanspruchten Stelle einen Gegendruck aufzubauen, der ein Eindringen von Rauchgasen zum Wärmetauscherrohr verhindert.

Um insbesondere auch bei einem Defekt am Keramikbauteil eine ausreichende Versorgung mit Sperrluft sicher zu stellen wird vorgeschlagen, dass das Gasrohr mehrere längs des Wärmetauscherrohres beabstandete Öffnungen aufweist. Diese Öffnungen sind vorzugsweise über die Höhe des Strahlungsüberhitzers oder längs des Wärmetaucherrohres verteilt.

Das zugeführte Gas ist der Regel Luft. Als Gas kann jedoch auch ein die Verbrennung förderndes Gas wie Sauerstoff oder ein die Verbrennung beeinflussendes Gas verwendet werden. So kann beispielsweise als Gas auch Rauchgas wie insbesondere rezirkuliertes Rauchgas nach einer Abgasreinigungseinrichtung zugeführt werden.

Für die erfindungsgemäße Vorrichtung eignet sich ein Keramikbauteil mit vorzugsweise mehr als 85 % Siliziumkarbid aus mindestens zwei quaderförmigen Keramikelementen, die im Schnitt bogenförmige Wellen aufweisen und mit zueinander fluchtenden Wellentälern aneinander befestigt sind, sodass zwei Wärmetauscherrohrabschnitte in zwei gegenüberliegenden Wellentälern anordenbar sind und zwischen diesen Wellentälern in zwei gegenüberliegenden Wellentälern ein Gasführungsrohrabschnitt anordenbar ist.

Ein derartiges Keramikbauteil ermöglicht es, auf besonders einfache Art und Weise Wärmetauscherrohrabschnitte zu schützen, ein Gas zuzuführen und zwischen Keramikelementen einen Gasdruck aufzubauen, der ein Zuströmen von Rauchgasen zu den Wärmetauscherrohrabschnitten verhindert. Dabei ist das Keramikbauteil vorzugsweise so aufgebaut, dass ein Kontakt zwischen Wärmetauscherrohr und Keramikelement vermieden wird.

Das Verfahren und eine vorteilhafte Ausführungsform sowie ein Keramikelement sind in der Zeichnung dargestellt und werden im Folgenden beschrieben. Es zeigt
- Figur 1: den ersten Zug einer Kesselanlage mit von der Decke hängenden Überhitzerschlangen,
- Figur 2: einen Schnitt durch den Zug in Figur 1 längs der Linie AA,
- Figur 3: eine schematische vergrößerte Darstellung von Wärmetauscherrohren mit Keramikelementen,
- Figur 4: einen Schnitt durch ein Keramikelement für ein gebogenes Rohr und
- Figur 5: einen Schnitt durch ein Keramikelement für gerade Rohre.

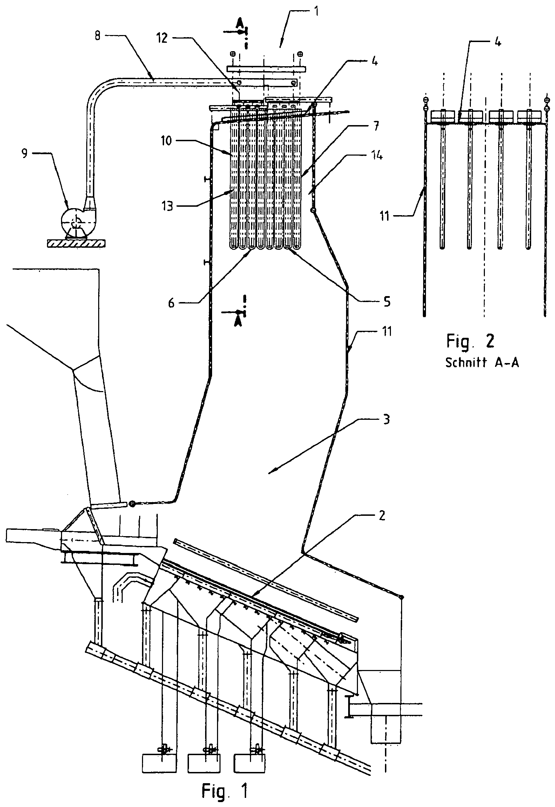

Die in Figur 1 gezeigte Kesselanlage 1 besteht aus einem Rost 2, einem Feuerraum 3 und einer an der Decke 4 aufgehängten Überhitzerschlange 5. Die Überhitzerschlange 5 ist mit einem Keramikbauteil 6 umgeben, das aus mehreren Keramikelementen 7 besteht, die über Mörtel miteinander verbunden sind. Das Keramikbauteil 6 ist über eine Leitung 8 mit einem Gebläse 9 verbunden und die Wärmetauscherrohre 10 der Überhitzerschlange 5 sind mit einer Kesselanlage 11 verbunden.

Dies ermöglicht es mittels der Kanäle 12 aus Gebläse 9 und Gasrohren 13 Luft zwischen die Wärmetauscherrohre 10 und das Keramikbauteil 6 zuführen. Da das Keramikbauteil 6 aus mehreren Keramikelementen 7 besteht, die lose aneinander anliegen und der Mörtel dazwischen häufig keine sichere Abdichtung ist, kann bei einem Leck Luft durch das Keramikbauteil 6 in den Rauchgaszug 14 strömen und dadurch verhindern, dass Rauchgas aus dem Rauchgaszug 14 zu den Wärmetauscherrohren 10 gelangt.

Die Figur 2 zeigt die Decke 4 des Rauchgaszuges 14 mit der Kesselanlage 11. Vorzugsweise ist die Decke 4 so ausgebildet, dass durch ein einfaches Öffnen der Decke 4 auf einer Linie nicht nur die Wärmetauscherrohre 10 in den Rauchgaszug 14 geführt werden können sondern auch die Gasrohre 13. Dabei ist es vorteilhaft, wenn ein Keramikelement 7 des Keramikbauteiles 6 sich durch die Decke 4 erstreckt, um auch bei Längenschwankungen im Bereich der Wärmetauscherrohre 10 und der Keramikelemente 7 eine vollständige Abdeckung der Wärmetauscherrohre 10 innerhalb des Rauchgaszuges 14 zu gewährleisten.

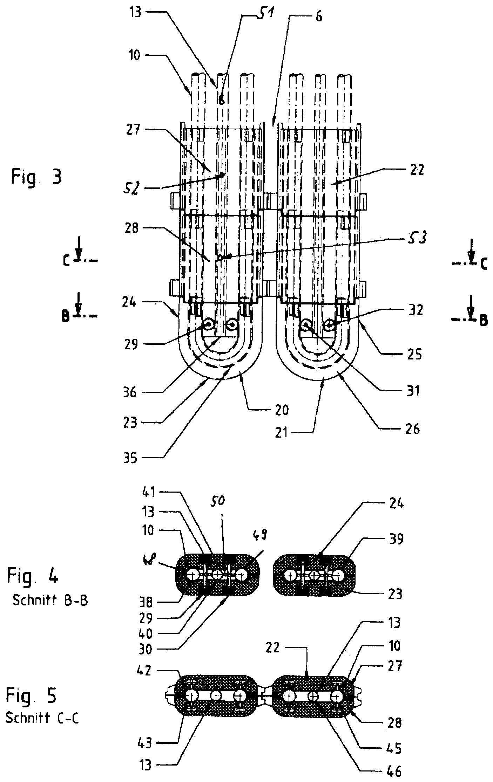

Das in Figur 3 gezeigte untere Ende eines Teils der Überhitzerschlange 5 zeigt zwei Bogenplatten 20, 21 und eine quaderförmige Platte 22. Alle Platten bestehen jeweils aus zwei Keramikelementen 23, 24, 25, 26 und 27, 28. Die bogenförmigen Platten 20, 21 bestehen aus zwei Elementen 23, 24 bzw. 25, 26, die über eine Schraubverbindung 29, 30 bzw. 31, 32 aneinander befestigt sind, sodass die Keramikelemente jeweils zwei gegenüberliegende Seiten des Keramikbauteils 6 bilden, die von Rauchgas angeströmt werden können.

Die aus zwei quaderförmigen Keramikelementen 27, 28 aufgebaute quaderförmige Platte 22 ist in einer geöffneten Position dargestellt, die Wellen 34 an der Innenseite der Keramikelemente 27, 28 zeigt, die zueinander fluchtend jeweils einen kreisförmigen Raum 48, 49 für den Zulauf und den Ablauf des U-förmigen Wärmetauscherrohres 10 bilden und dazwischen einen Raum 50 für das Gasrohr 13 bilden. Der U-förmige Bogen des Wärmetauscherrohres 10 und der Verlauf des Gasrohrs 13 sind mit einer punktierten Linie angedeutet. Dies zeigt, dass das Gasrohr 13 der Gaszuführung 12 im Bereich des Bogens 35 mit einer Öffnung 36 endet.

Die Figur 4 zeigt einen Schnitt durch die Bogenplatte 20 mit den Schraubverbindungen 29 und 30. Die Innenseite der Elemente 23 und 24 hat jeweils zwei Wellentäler 36, 37 bzw. 38, 39 zur Aufnahme des Wärmetauscherrohres 10 und dazwischen zwei Wellentäler 40, 41 zur Aufnahme des Gasrohres 13.

In entsprechender Bauweise ist wie in Figur 5 gezeigt, die quaderförmige Platte 22 aus zwei Keramikelementen 27, 28 aufgebaut, die miteinander formschlüssig verbunden sind und an ihrer Innenseite Wellentäler 42 bis 45 für ein Rauchgasrohr 10 und Wellentäler 46, 47 für ein Gasrohr 13 aufweisen.

Das Gasrohr 13 kann über seine Länge verteilte Bohrungen 51, 52, 53 aufweisen, um bei einem defekten Keramikbauteil sicher zu stellen, dass die darüber liegenden Wärmetauscherrohrbereiche weiterhin von Gas umspült werden.

## Patentansprüche

1. Vorrichtung mit einem Wärmetauscherrohr, dessen Umfangsfläche von mindestens einem Keramikbauteil (6) umgeben ist, und einer Gaszuführung (12) zu einem an das Wärmetauscherrohr (10) und an das Keramikbauteil (6) angrenzenden Raum (48, 49, 50), wobei die Gaszuführung (12) ein Gebläse (9) aufweist, das Keramikbauteil aus mehreren Keramikelementen aufgebaut ist und zwischen den Keramikelementen Spalten sind, sodass das zugeführte Gas zwischen Wärmetauscherrohr und Keramikbauteil das Wärmetauscherrohr dadurch schützen kann, dass ein geringer Überdruck an zuströmendem Gas ein Eindringen von Rauchgasen durch Spalten zwischen den Keramikelementen des Keramikbauteils zu den Wärmetauscherrohren verhindert, wobei die Gaszuführung (12) ein im Keramikbauteil (6) geführtes Gasrohr (13) aufweist, ***dadurch gekennzeich-net, dass*** das Gasrohr (13) mehrere längs des Wärmetauscherrohres (10) beabstandete Öffnungen (51, 52, 53) aufweist.

2. Vorrichtung nach Anspruch 1, ***dadurch gekennzeichnet, dass*** das Wärmetauscherrohr U-förmig gebogen ist und die Gaszuführung im Bereich des Bogens endet.

## Claims

1. A device with a heat exchanger tube, the circumferential surface of which is enveloped by at least one ceramic component (6), and a gas supply (12) to a space (48, 49, 50) adjoining the heat exchanger tube (10) and ceramic component (6), wherein the gas supply (12) has a blower (9), the ceramic component is made up of several ceramic elements, and there are gaps between the ceramic elements, so that the supplied gas can protect the heat exchanger tube between the heat exchanger tube and ceramic component by virtue of the fact that a slight excess pressure of inflowing gas prevents flue gas from penetrating through gaps between the ceramic elements of the ceramic component to the heat exchanger tubes, wherein gas supply (12) has a gas tube (13) that runs in the ceramic component (6), ***characterized in that*** the gas tube (13) has several openings (51, 52, 53) spaced apart along the heat exchanger tube (10).

2. The device according to claim 1, ***characterized in that*** the heat exchanger tube is bent into a U shape, and the gas supply ends in the area of the arc.

## Revendications

1. Dispositif avec un tube d'échangeur de chaleur, dont la surface périphérique d'au moins un composant en céramique est entourée par au moins un composant en céramique (6) et une alimentation en gaz (12) vers un espace (48, 49, 50) voisin du tube d'échangeur de chaleur (10) et du composant en céramique (6), l'alimentation en gaz (12) comportant une soufflante (9), le composant en céramique étant constitué de plusieurs éléments en céramique et des interstices étant situés entre les éléments en céramique de telle sorte que le gaz acheminé entre le tube d'échangeur de chaleur et le composant en céramique peut protéger le tube d'échangeur de chaleur par le fait qu'une surpression faible sur le gaz affluant évite une pénétration de gaz de combustion à travers les interstices entre les éléments en céramique du composant en céramique vers les tubes d'échangeur de chaleur, dans lequel l'acheminement du gaz (12) comporte un tuyau de gaz (13) guidé dans le composant en céramique (6), ***caractérisé en ce que*** le tuyau de gaz (13) comporte plusieurs ouvertures (51, 52, 53) espacées le long du tube d'échangeur de chaleur (10).

2. Dispositif selon la revendication 1, ***caractérisé en ce que*** le tube d'échangeur de chaleur est courbé en forme de U et l'alimentation en gaz se termine dans la zone de la courbe.
